# EUROPEAN PATENT APPLICATION

(11) **EP 2 154 905 A1**
(43) Date of publication of application: **17.02.2010**
(21) Application number: 08733905.7
(22) Date of filing: 03.04.2008
(51) Int. Cl.: H04Q 7/38

(54) **METHOD OF DISCONTINUOUS RECEIVING STATUS THAT THE USER EQUIPMENT ENTERED**

(30) Priority: 28.04.2007 CN 200710097267
(71) Applicant: ZTE Corporation, Shenzhen, Guangdong 518057 (CN)
(72) Inventor: KE, Yazhu, Guangdong 518057 (CN); DU, Zhongda, Guangdong 518057 (CN)
(74) Representative: Moir, Elizabeth
(86) International application number: PCT/CN2008/000691
(87) International publication number: WO 2008/131640

(57) **Abstract**

A method for user equipment entering discontinuous reception status, wherein the process of the user equipment side includes: the user equipment starts a timer for entering the discontinuous reception status when the user equipment receives downlink data or uplink grant; the user equipment enters the discontinuous reception status when the timer expires; wherein before the timer expires, if the user equipment receives new downlink data or uplink grant, the user equipment restarts the timer. Further, the process of the base station side includes: the base station starts the timer for the user equipment entering the discontinuous reception status when the base station has sent the downlink data or uplink grant to the user equipment; the base station determines that the user equipment enters the discontinuous reception status when the timer expires; wherein before the timer expires, if the base station transmits again the downlink data or uplink grant to the user equipment, then the base station restarts the timer.

## Description

### Filed of the Invention

The present invention relates to communication field, and particularly to a method for a user equipment entering discontinuous reception status with the user equipment is related to the discontinuous reception technology employed by a radio communication system.

### Background of the Invention

With the further evolvement of the radio communication technology, in order to simplify the maintenance status that a user equipment and network side equipment applies to one user, the kinds of the statuses under the connection mode of Radio Resource Control (RRC) are reduced, that is to say, there are only RRC connection mode and idle mode. In the RRC connection mode, the user equipment can carry out the reception and transmit of data and various measurements. In addition, when being in RRC connection mode, the user equipment shall consistently monitor the downlink control channel, which results in the user equipment consuming great power. Thus discontinuous reception (DRX) technology is introduced by the 3GPP (3^{rd} Generation Partnership Project) standard protocol, wherein if the user equipment is in RRC active mode, when the user equipment does not transmit or receive the data or is not scheduled by a base station, the user equipment can enter the discontinuous reception status so as to save power.

The prior art discontinuous reception technology employs two mechanisms, i.e., short discontinuous reception cycle and long discontinuous reception cycle. That is, the user equipment (UE) will enter a discontinuous reception status (short_DRX/mid_DRX status) under the control of the short discontinuous reception cycle when having not received or transmitted data for a relative short time period, and the user equipment will enter a discontinuous reception status (long_DRX status) under the control of the long discontinuous reception cycle when having not received or transmitted data for a relative long time period. When the user equipment needs to receive data or has received uplink grant, the user equipment enters continue status ( in which data is received or transmitted).

The user equipment can enter the discontinuous reception status in an implicit way or explicit way. In the implicit way, a timer is employed for controlling, for instance, when the user equipment monitors no data to be received, the timer is started, and when the timer expires the user equipment enters the discontinuous reception status. The base station informs the terminal the timing length and rule of the timer in advance via signaling, thus no additional signaling is required during the initiation. In the explicit way, the base station directly instructs the user equipment to enter the discontinuous reception status via signaling, for example, the base station instructs the user equipment via the signaling of layer 1 or layer 2, and at the same time, informs the user equipment the concrete control parameters for entering the discontinuous reception status (e.g. the discontinuous reception cycle, etc.).

Apparently, when the user equipment enters the discontinuous reception status in the implicit way, the base station needs to use a corresponding rule to determine that the user equipment entered the discontinuous receiving status, so as to transmit data to the user equipment when the latter wakes up, thus avoiding the lost data resulting from the base station transmitting the data during the sleep period of the user equipment.

However, unfortunately, there is no related specification or rule that the base station uses for deciding when the user equipment enters the discontinuous receiving status and determining that the user equipment has entered the discontinuous status, which is explicitly disadvantageous for ensuring the proper communication of the user equipment and the base station rationally scheduling the user data.

### Invention Summery

The present invention is made in view of the above problem and directed to provide a method for user equipment entering a discontinuous reception status.

In the method of the present invention, the process of the user equipment side includes: Step S102, the user equipment starts a timer for entering the discontinuous reception status when receiving downlink data or uplink grant; and Step S104, the user equipment enters the discontinuous reception status when the timer expires; wherein before the timer expires, if the user equipment receives new downlink data or uplink grant, the user equipment restarts the timer.

Meanwhile, In the above S 102, the downlink data received by the user equipment is a correct data packet or a wrong data packet.

In addition, according to the present method, the process of the base station side includes: Step S202, the base station starts a timer used for the user equipment entering the discontinuous reception status when the base station has sent the downlink data or uplink grant to the user equipment; and Step S204, when the timer expires, the base station determines that the user equipment enters the discontinuous reception status; wherein before the timer expires, if the base station transmits again the downlink data or uplink grant to the user equipment, then the base station restarts the timer.

In the above step S202, the downlink data that the base station sends to the user equipment is the new transmission data or retransmission data.

In addition, before the timer expires, if the base station receives a negative acknowledgement fed back by the user equipment, then the base station can perform no process on the timer.

The above mentioned discontinuous reception status refers to the status in which the user equipment does not receive data.

According to the above technical solution of the present invention, the base station and the user equipment can utilize a same rule to start the timer for entering the discontinuous reception status, so as to make the user equipment communicate normally and ensure the base station can rationally schedule user data, thus the system resource is saved and the system capability is improved.

### Brief Description of the Drawings

The illustrated drawings herein provide a further understanding of the present invention and form a part of the application. The exemplary embodiments and the description thereof are intended to explain the present invention, without limiting the scope of the present invention, wherein:
Fig. 1 is a process flow chart of the process of the user equipment side in the method for the user equipment entering the discontinuous reception status according to the embodiment of the present invention;
Fig.2 is a process flow chart of the process of the base station side in the method for the user equipment entering the discontinuous reception status according to the embodiment of the present invention;
Fig.3 is a time relationship diagram between the user equipment entering the discontinuous reception status and the base station determining that the user equipment has entered the discontinuous reception status in the method for the user equipment entering the discontinuous reception status according to the present invention;
Fig.4 is a time relationship diagram of the Example 1 of the method for the user equipment entering the discontinuous reception status according to the embodiment of the present invention;
Fig.5 is a time relationship diagram of the Example 2 of the method for the user equipment entering the discontinuous reception status according to the embodiment of the present invention;
Fig.6 is a time relationship diagram of the Example 3 of the method for the user equipment entering the discontinuous receiving status according to the embodiment of the present invention.

### Detailed Description

The detailed description of the embodiment of the present invention will be provided in connection the drawings. It should be noted that the embodiments are provided for a thorough understanding of the present invention but not for any limitation thereof.

According to one embodiment of the present invention, it is provided a method for user equipment (UE) entering discontinuous reception status (DRX status).

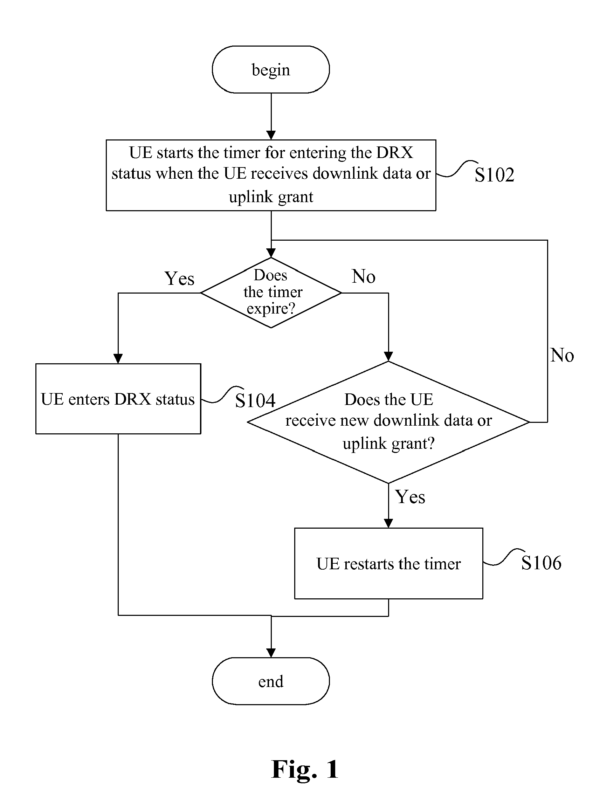

As shown in Fig. 1, according to the method, the process of the user equipment side includes: Step S102, the user equipment starts a timer for entering discontinuous reception status when the user equipment has received downlink data (e.g. PDU) or uplink grant; and Step S 104, the user equipment enters the discontinuous reception status when the timer expires; wherein before the timer expires, if the user equipment receives the new downlink data or the uplink grant, the user equipment restarts the timer.

In the above S102, the downlink data received by the user equipment is a correct dada packet or a wrong data packet.

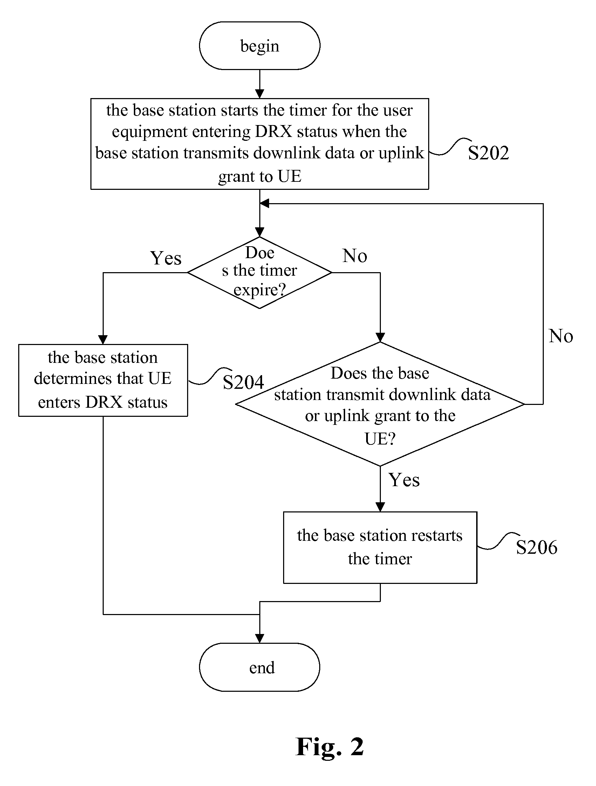

In addition, as shown in Fig.2, according to the method, the process of the base station side includes: Step S202, the base station starts a timer for the user equipment entering the discontinuous reception status when the base station has sent the downlink data or uplink grant to the user equipment; and Step S204, the base station determines that the user equipment enters the discontinuous reception status when the timer expires; wherein before the timer expires, if the base station transmits again the downlink data or uplink grant to the user equipment, then the base station restarts the timer.

In the above Step S202, the downlink data the base station sends to the user equipment is the new transmission data or retransmission data.

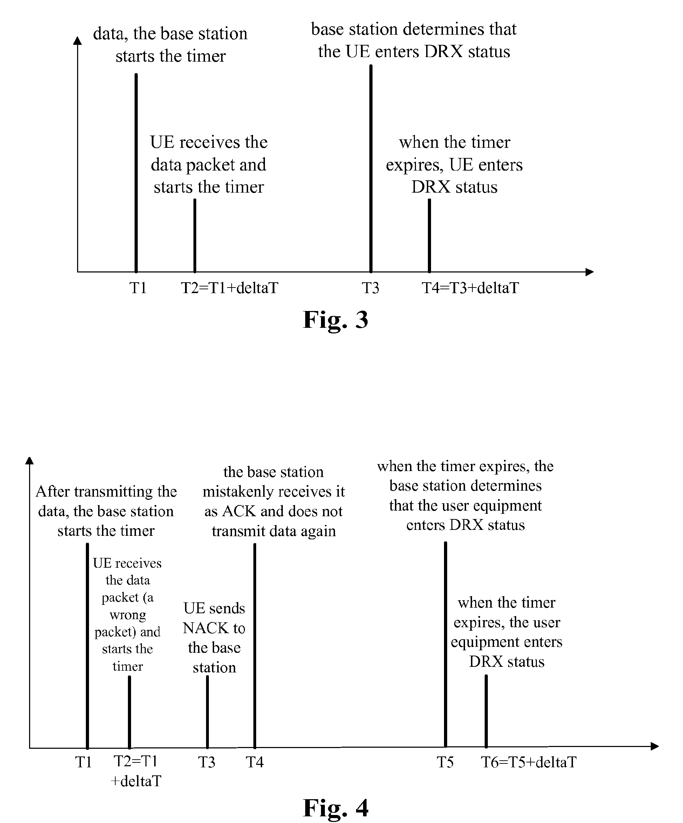

Fig.3 is a time relationship diagram between the user equipment entering the discontinuous reception status and the base station determining that the user equipment has entered the discontinuous reception status.

As shown in Fig.3, at time T1, after the base station transmits the data (or the uplink grant), the timer for the user equipment entering the discontinuous reception status is started; at time T2, the user equipment receives the data packet sent by the base station and then starts the timer for entering the discontinuous reception status wherein T2 lags behind T1 by ΔT (deltaT) which is the transmission time delay; at time T3, when the base station monitors that the timer for entering the discontinuous reception status expires, it is determined that the user equipment enters the discontinuous reception status; at time T4, when the user equipment monitors that the timer for entering the discontinuous reception status expires, and the UE enters the discontinuous reception status, wherein, T4 lags behind T3 by ΔT (deltaT).

In addition, before the expiration of the timer, if the base station has received a negative acknowledgement (NACK) fed back by the user equipment, then the base station may perform no process on the timer (restarts the timer when the data is retransmitted).

Based on the description above, it is described in connection to examples the related processes performed by the base station and the user equipment when the feedback information of the UE monitored by the base station is different from the feedback information sent by the UE.

### Example 1

In this example, assuming a condition wherein the user equipment has sent NACK which however is received by the base station as ACK (correct acknowledgement), as shown in Fig.4, the processes at individual time point are as following:
At time T1, after transmitting data, the base station starts the timer for the user equipment entering discontinuous reception status;
At time T2, the user equipment receives a data packet sent by the base station, and the data packet is a wrong data packet, then the user equipment starts the timer for entering the discontinuous reception status, and returns NACK to the base station at time T3, wherein T2 lags behind T1 by ΔT (deltaT) which is the transmission time delay;
At time T4, the base station monitors that the user equipment returns ACK (i.e., the base station receives NACK which is taken as ACK);
At time T5, when the base station monitors that the timer for entering the discontinuous reception status expires, it is determined that the user equipment enters the discontinuous reception status;
At time T6, when monitoring that the timer for entering the discontinuous reception status expires, the user equipment enters the discontinuous reception status, wherein T6 lags behind T5 by ΔT (deltaT).

### Example 2

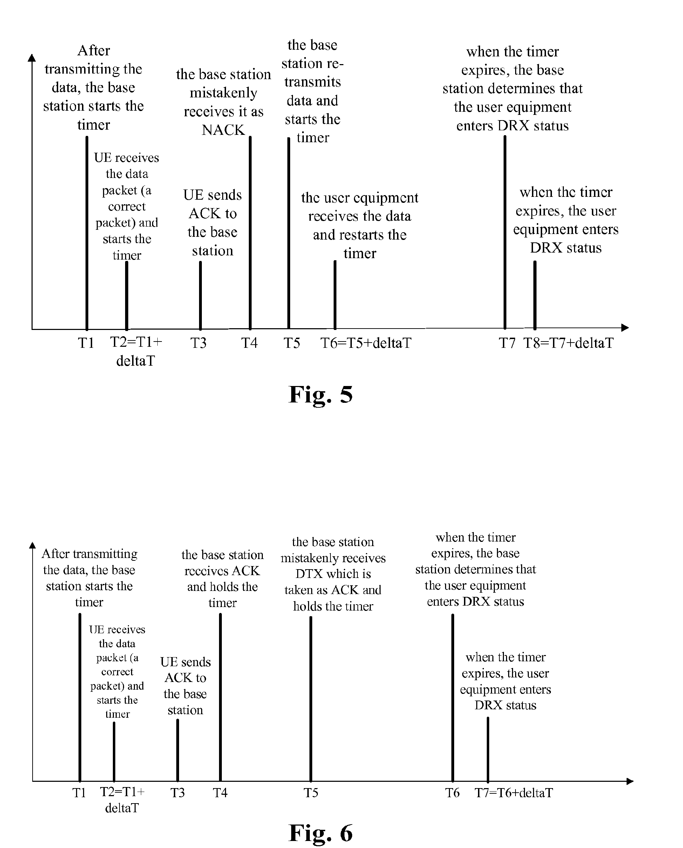

In this example, assuming a condition wherein the user equipment has sent ACK which is however received by the base station as NACK, as shown in Fig.5, the processes at individual time points are as following:
At time T1, after transmitting data, the base station starts the timer for the user equipment entering the discontinuous reception status;
At time T2, the user equipment receives a data packet sent by the base station and the data packet is a correct data packet, then the user equipment starts the timer for entering the discontinuous reception status, and returns ACK to the base station at time T3, wherein T2 lags behind T1 by ΔT (deltaT) which is the transmission time delay;
At time T4, the base station monitors that the user equipment returns NACK (i.e., the base station receives ACK which is taken as NACK);
At time T5, the base station retransmits data and starts the timer for entering the discontinuous reception status;
At time T6, the user equipment receives the data sent by the base station and restarts the timer for entering the discontinuous reception status;
At time T7, when the base station monitors that the timer for entering the discontinuous reception status expires, it is determined that the user equipment enters the discontinuous reception status;
At time T8, when monitoring that the timer for entering the discontinuous reception status expires, the user equipment enters the discontinuous reception status, wherein T8 lags behind T7 by ΔT (deltaT).

### Example 3

In this example, assuming a condition wherein the base station receives DTX (discontinuous transmission) which is taken as ACK, as shown in Fig.6, the processes at individual time points are as following:
At time T1, after transmitting data, the base station starts the timer for the user equipment entering the discontinuous reception status;
At time T2, the user equipment receives a data packet sent by the base station and the data packet is a correct data packet, then the user equipment starts the timer for entering the discontinuous reception status, and returns ACK to the base station at time T3, wherein T2 lags behind T1 by ΔT (deltaT) which is the transmission time delay;
At time T4, the base station monitors that the user equipment returns ACK and holds the timer;
At time T5, the base station receives ACK (receives DTX which is taken as ACK) and holds the timer;
At time T6, when the base station monitors that the timer for entering the discontinuous reception status expires, it is determined that the user equipment enters the discontinuous reception status;
At time T7, when monitoring that the timer for entering the discontinuous reception status expires, the user equipment enters the discontinuous reception status wherein T7 lags behind T6 by ΔT (deltaT).

It is apparent from the above described examples that, with the technical solution of the present invention, it is possible to avoid the difference between the statuses of the base station and the user equipment which is resulted from that the base station mistakenly receives NACK as ACK, or DTX is mistakenly received as ACK.

Hereinafter, the above mentioned discontinuous reception status will be described further.

The discontinuous reception status referred by the present invention is the status in which the user equipment discontinuously receives data, which may be the top discontinuous reception status (top_DRX status) or middle discontinuous reception status (mid_DRX status).

As discussed above, in the prior art, the discontinuous reception status is classified into the long discontinuous reception status (long_DRX status) and the short discontinuous reception status (short_DRX/mid_DRX status). But in fact, the terms "long" and "short" are relativity concepts which are thus difficult in certain circumstances to exactly specifying a concrete discontinuous status and easy to cause different interpretations. For example, it is assumed that there are two discontinuous reception cycles set for the short_DRX/mid_DRX status, then the two cycles can also be described as long and short, thus it is very possible to bring about confusion. So the present invention re-defmes them as the top_DRX status and mid_DRX status.

In particularly, in the circumstance that a plurality of discontinuous reception cycles are configured for a terminal, the top discontinuous reception status (top_DRX status) is the discontinuous reception status controlled by the longest one of a plurality of discontinuous reception cycles; and the middle discontinuous reception status (mid_DRX status) is the discontinuous reception status controlled by the cycles less than the longest one of the plurality of discontinuous reception cycles. In the circumstance that one discontinuous reception cycle is configured for a terminal, the top discontinuous reception status (top_DRX status) is the discontinuous reception status controlled by the discontinuous reception cycle.

Collectively, according to the technical solution of the present invention, in one aspect, the user equipment can normally communicate and it is assured that the base station rationally schedule user's data; and in the other aspect, it is prevented from that there is difference between the statuses of the base station and the user equipment which is resulting from the difference between the feedback information detected by the base station and the feedback information sent by the user equipment.

Above description is to illustrate the preferred embodiments, without limiting the present invention. It is apparent for those skilled in the art that various alterations and changes can be made to the present invention. The scope defined by claims of the present invention shall comprises any modification, equivalent substitution and improvement in the spirit and principle of the present invention.

## Claims

1. A method for user equipment entering discontinuous reception status, **characterized in that** the process of user equipment side comprises,
Step S102, the said user equipment starts a timer for entering the discontinuous reception status when the user equipment receives downlink data or uplink grant; and
Step S104, the user equipment enters the discontinuous reception status when the timer expires;
wherein before the timer expires, if the user equipment receives new downlink data or uplink grant, the user equipment restarts the timer.

2. The method for the user equipment entering discontinuous reception status according to Claim 1, **characterized in that**, in the Step S102, the downlink data received by the user equipment is a correct data packet or a wrong data packet.

3. The method for user equipment entering discontinuous reception status according to Claim 1, **characterized in that** the process of base station side comprises:
Step S202, the base station starts the timer for the user equipment entering the discontinuous reception status, when the base station has sent the downlink data or uplink grant to the user equipment; and
Step S204, the base station determines that the user equipment enters the discontinuous reception status when the timer expires;
wherein before the timer expires, if the base station transmits again the downlink data or uplink grant to the user equipment, then the base station restarts the timer.

4. The method for user equipment entering discontinuous reception status according to Claim 3, **characterized in that**, in the Step S202, the downlink data that the base station sends to the user equipment is a new transmission data or retransmission data.

5. The method for user equipment entering discontinuous reception status according to Claim 3, **characterized in** further comprising the follows process:
before the timer expires, if the base station receives a negative acknowledgement fed back by the user equipment, then the base station performs no process on the timer.

6. The method for user equipment entering discontinuous reception status according to anyone of Claims 1-5, **characterized in that** the discontinuous reception status is the status in which the user equipment does not receive data.
